# DEMANDE DE BREVET EUROPEEN

(11) **EP 3 375 293 A1**
(43) Date de publication de la demande: **19.09.2018**
(21) Numéro de dépôt: 18161377.9
(22) Date de dépôt: 13.03.2018
(51) Int. Cl.: A23C 9/13, A23C 11/10, A23C 20/00

(54) **PRODUIT ALIMENTAIRE À BASE DE LAIT VÉGÉTAL**

(30) Priorité: 15.03.2017 FR 1752111
(71) Demandeur: Société Cooperative Agricole et Agro-Alimentaire AGRIAL, 14000 Caen (FR)
(72) Inventeur: FALCONNIER, Patrick, 77760 RECLOSES (FR); RAMOS, Patricia, 45120 CEPOY (FR)
(74) Mandataire: Agasse, Stéphane

(57) **Abrégé**

L'invention concerne un produit alimentaire à base de lait végétal et son procédé de fabrication, ledit produit comprenant au moins un lait d'au moins une céréale chauffé, une poudre d'au moins une céréale identique ou différente de celle dudit lait de céréales et une purée ou une poudre d'au moins un oléagineux, et dont au moins 30% (m/m) par rapport aux fibres alimentaires totales sont apportées par la ou les céréales dudit lait.

## Description

L'invention concerne un produit alimentaire à base de lait végétal et plus précisément un produit à base de lait de céréales, ainsi que son procédé de fabrication.

Il se présente généralement sous la forme d'un dessert, tel qu'une crème dessert avec une texture plus ou moins épaisse et lisse, tel qu'un flan, et aussi tel qu'un produit ayant subi une fermentation de type yaourt, et notamment un produit de type yaourt ferme, brassé ou à boire, de type fromage frais ou de type crème fraîche, à consommer seul ou en accompagnement. Il peut avoir un goût neutre, sucré, salé ; il peut être aromatisé ou en mélange avec tout ingrédient éventuellement en morceaux ou mixé, comme des fruits ; il peut aussi comprendre tout ingrédient alimentaire et tout élément nutritionnel ; l'ensemble de ces variantes concourant à l'obtention d'un produit possédant des qualités organoleptiques et/ou nutritionnelles optimales.

On connait des produits à base de lait végétal. Ainsi, les produits à base de lait de soja d'un goût assez neutre et facile à transformer sont largement commercialisés. On connait aussi, selon le document US2016/0309732A1, des produits à base de lait d'autres légumineuses que le soja. Ces légumineuses telles que des pois chiches, des pois jaunes, des lentilles vertes, des fèves, des haricots Pinto, sont transformées en lait par un procédé classique de traitement enzymatique avec une ou des amylases d'un milieu contenant lesdites légumineuses et de l'eau. Le lait obtenu est alors traité par divers additifs comme des émulsifiants, des lipides, mais aussi par des ferments, afin d'élaborer un produit qui est ensuite incorporé à des préparations par exemple en tant que substitut laitier, ou bien consommé en remplacement d'un produit laitier. L'inconvénient majeur du lait de légumineuses réside dans son défaut de neutralité, ce qui le destine davantage à des préparations salées et nécessite parfois une aromatisation capable de masquer le goût de la légumineuse.

L'invention vise à fournir un produit à base de lait végétal, en tant que substitut laitier, susceptible d'être consommé seul en tant que produit possédant des qualités organoleptiques et nutritionnelles optimales, ou dans toute préparation notamment pour en compléter les propriétés nutritionnelles ou organoleptiques. Le produit de l'invention est obtenu à partir de lait de céréales. Il peut être fabriqué sous diverses formes sans qu'un recours à des additifs de type texturant ne soit utile. Il est d'un goût neutre et doux, et peut être aromatisé par tout ingrédient.

Avant de décrire l'invention, différents termes employés dans le présent texte sont définis.

On entend par céréales, les graines des plantes appelées céréales, sans limitation dans le choix, étant entendu qu'en fonction des qualités organoleptiques recherchées du produit, certaines céréales seront préférées à d'autres. A titre d'exemple, elles peuvent être sélectionnées parmi l'avoine, le riz, l'épeautre, le maïs, le blé, l'orge, le seigle, le tapioca, le millet, le teff. Dans cette définition, on inclut les graines d'autres familles botaniques que les céréales ci-dessus, qu'on appelle pseudo-céréales, comme le quinoa, le sarrasin, l'amarante, le sésame.

Le terme « lait » a une définition légale donnée dans le Règlement (UE) N°2013/1308 - Annexe VII, Partie IV, a) « lait » : le produit provenant de la traite d'une ou de plusieurs vaches. Par extrapolation, dans le présent texte, le terme « lait » végétal ou lait de céréale(s) sera utilisé pour désigner un ingrédient liquide à base de céréales.

Par lait de céréales, on entend un liquide plus ou moins dense, à minima obtenu par traitement d'un milieu aqueux contenant les céréales telles que définies ci-dessus, avec au moins une enzyme, une amylase, capable d'hydrolyser au moins partiellement l'amidon contenu dans les céréales. A titre d'exemple, on peut préparer un lait d'avoine à partir d'un milieu aqueux d'avoine que l'on traite par une alpha-amylase commercialisée sous la marque Validase®BAA par DSM en une concentration de 0,01-0,3 % (m/m) par rapport à la masse de céréales. Selon l'invention, la teneur en céréales du lait est de préférence de 8-20% (m/m) par rapport à la masse du lait. Il est obtenu par toute technique qui relève des connaissances générales et compétences de l'homme du métier. A ce titre, il a de préférence subi un traitement de stérilisation. Il peut en outre avoir été soumis à tout autre traitement, par exemple une fermentation.

Le terme « yaourt » ayant une définition légale, à savoir qu'il désigne une préparation à base de lait de de vache, de chèvre, de brebis, de jument, d'ânesse, de chamelle ou de bufflonne, non égoutté et fermenté, le terme « produit de type yaourt » sera utilisé pour définir une préparation similaire, c'est-à-dire ayant subi une fermentation, celle-ci pouvant être effectuée à tout moment du procédé de fabrication, et/ou étant préparée à partir d'un lait végétal fermenté.

Une poudre ou une crème de céréale(s), ou une poudre ou une purée d'oléagineux telle qu'on l'entend selon l'invention résulte d'un broyage partout moyen connu de l'homme du métier de céréale(s) ou d'oléagineux, respectivement, qui selon la finesse des particules résultantes et la nature des céréales ou des oléagineux peut s'apparenter à une mouture sèche jusqu'à crémeuse. Ainsi, on parlera d'une poudre pour une mouture essentiellement sèche et d'une crème dans le cas de céréale(s) ou d'une purée dans le cas d'oléagineux, pour une mouture essentiellement crémeuse. A titre d'illustration, une crème d'avoine ou une crème de riz sont définies dans le document 2010/791/UE, Décision de la Commission du 20 décembre 2010 établissant la liste des produits visés à l'annexe XII, point III 1, deuxième alinéa, du règlement (CE) N°1234/2007 du Conseil.

Les propriétés ou qualités organoleptiques regroupent toutes les caractéristiques perçues par le consommateur, c'est-à-dire l'apparence, la couleur, la texture, le goût, l'odeur, les arômes.

Les propriétés ou qualités nutritionnelles réunissent la valeur énergétique d'un produit, généralement exprimée en calories, et la quantité des nutriments qui y sont présents; en particulier, ces nutriments sont les acides gras saturés et insaturés ou graisses saturées et insaturées, les fibres alimentaires, les glucides, les lipides, les protéines, les minéraux, les sucres et les vitamines. Ainsi, on peut obtenir, selon l'invention, un produit dont la teneur en fibres alimentaires est d'au moins 1,5 g/100 kcal, selon l'allégation « source de fibres » définie à l'annexe du règlement (CE) N°1924/2006 du Parlement européen et du Conseil du 20 décembre 2006 concernant les allégations nutritionnelles et de santé portant sur les denrées alimentaires); on peut aussi obtenir un produit dont la teneur en acides gras saturés et en acides gras de la famille des acides gras trans, est d'au plus 1.5% (m/m) par rapport à la masse dudit produit, la somme des acides gras saturés et des acides gras trans ne pouvant pas produire plus de 10% de l'énergie, selon l'allégation « faible teneur en graisses saturées » de l'annexe citée ci-dessus.

Le produit alimentaire à base de lait végétal, qui est un objet de la présente invention, comprend au moins un lait d'au moins une céréale chauffé, une poudre d'au moins une céréale identique ou différente de celle dudit lait de céréales et une purée ou une poudre d'au moins un oléagineux, et dont au moins 30% (m/m) par rapport aux fibres alimentaires totales sont apportées par la ou les céréales dudit lait. Ledit lait d'au moins une céréale est selon l'invention obtenu par hydrolyse enzymatique d'un milieu aqueux contenant la ou les céréales.

La poudre de céréale(s) et la purée ou la poudre d'oléagineux constituent une combinaison d'ingrédients qui en association avec le lait végétal vont permettre d'obtenir un produit à fort potentiel gustatif et nutritionnel, sans ajout d'additif texturant. Selon une variante avantageuse de l'invention, la poudre de céréales comprend une poudre de la céréale dudit lait et au moins une poudre d'une céréale différente de celle dudit lait.

Le choix des céréales pourra être déterminé par les qualités nutritionnelles recherchées du produit, comme par exemple, pour préparer un produit exempt de gluten ou à teneurs faibles en fructanes fermentescibles sources d'inconfort, on sélectionnera les céréales de préférence parmi le riz brun, le quinoa, le sarrasin, le millet, l'amarante, le teff. Il en est de même pour leurs proportions ; ainsi pour préparer un produit hyper-protéiné, la proportion de poudre de céréales sera plus élevée.

Le choix du ou des oléagineux sera guidé par les propriétés souhaitées du produit préparé. A titre d'exemple, il est choisi parmi le sésame, la noix, l'amande, la noisette.

Dans une formulation préférée, le produit de l'invention comprend au moins :
60-95% de lait de céréale(s) chauffé, ledit lait contenant de préférence de 8-20% de céréales (m/m) par rapport à la masse du lait,
1-10% de poudre de céréale(s), la ou lesdites céréales étant choisies parmi celle(s) du lait et les céréales différentes de celle(s) du lait ; ainsi, la poudre de céréales peut comprendre 0-5% de poudre d'avoine et 1-5% de poudre de riz, et
1-10% de purée ou de poudre d'oléagineux,
les pourcentages étant exprimés en m/m par rapport à la masse du produit.

Comme indiqué précédemment, le produit contient une proportion très intéressante en fibres alimentaires ; au moins 30, de préférence au moins 40, voire au moins 50% (m/m) des fibres alimentaires par rapport à la masse desdites fibres alimentaires sont apportées par le lait de céréales chauffé. La proportion peut être relevée par l'apport de la poudre de céréales dont la proportion pourra être déterminée en conséquence. Elle pourra aussi être augmentée par des ingrédients à vocation organoleptique forts pourvoyeurs en fibres comme le chocolat, le cacao, etc, dans le cas de produits de type gourmand.

Selon un produit préféré de l'invention, celui-ci comprend du lait d'avoine chauffé, de la poudre d'avoine, de la poudre de riz et de la purée d'amande.

En fonction des propriétés organoleptiques et/ou nutritionnelles poursuivies, le produit pourra répondre aux caractéristiques suivantes, qu'elles soient considérées seules ou en combinaison :
- Il peut comprendre en outre des ingrédients alimentaires ; de tels ingrédients sont par exemple ceux définis dans le Règlement INCO (R. 2011/1169 - Art. 2 - Information des consommateurs sur les denrées alimentaires; ils sont notamment choisis parmi toute substance ou tout produit, y compris des éléments nutritionnels, et en particulier parmi des agents sucrants, des arômes, des vitamines, des minéraux, des acides aminés, des acides gras insaturés, des stérols, des antioxydants, par exemple des polyphénols ;
- Il peut comprendre en outre des ferments, des fruits sous forme de préparations avec morceaux, jus, purées ou de préparations de graines, de biscuits ;
- Il peut être dépourvu de légumineuses, de gluten et/ou d'additifs texturants ou de tout autre nutriment/ingrédient allergisant ou susceptible de générer un inconfort, une digestion difficile...

L'invention apporte aussi un procédé de fabrication d'un produit à partir de lait végétal tel que défini ci-dessus. Il comprend au moins les étapes suivantes :
a) On additionne sous agitation à du lait d'au moins une céréale, au moins une poudre d'au moins une céréale et une poudre d'au moins un oléagineux,
b) On chauffe le mélange obtenu à l'étape a) à une température de 110-140°C, et
c) On refroidit.

L'étape a) de mélange est de préférence réalisée à une température inférieure à la température de gélatinisation de l'amidon de la/des céréales, par exemple de 10-70°C. Un chauffage doux permet un gonflement progressif des amidons présents et sa durée sera adaptée à l'épaississement attendu. La température initiale et pendant une partie suffisante du procédé doit toujours être inférieure à la température de gélatinisation de l'amidon de la ou des céréales, cette température étant spécifique de la ou des céréales. Au cours de cette étape a), il est avantageux d'additionner au lait de céréales, successivement, la poudre de la ou des céréales dudit lait, la poudre de la ou des céréales différentes de celle(s) dudit lait et la purée ou la poudre d'oléagineux. Pour préparer un produit préféré de l'invention, le mélange à l'étape a) comprend au moins 60-95% de lait d'avoine chauffé contenant de 8-20% de céréales (m/m), 0-5% de poudre d'avoine, 1-5% de poudre de riz et 1-10% de purée d'amande, les pourcentages étant exprimés en m/m par rapport à la masse du mélange.

Si le produit doit comprendre des ingrédients alimentaires et/ou des éléments nutritionnels, et notamment des agents sucrants, des arômes, des vitamines, des minéraux, des acides aminés, des acides gras insaturés, des antioxydants, il est préférable qu'ils soient incorporés comme suit :
- les agents sucrants sont ajoutés au lait de céréales pendant l'addition de la ou des poudres de céréales et avant, pendant, et/ou après l'addition de la purée ou de la poudre d'oléagineux, et/ou
- les autres ingrédients alimentaires et les éléments nutritionnels sont ajoutés après l'addition de la ou des poudres de céréales pour ceux qui sont hydrosolubles et après l'addition de la purée ou de la poudre d'oléagineux pour ceux qui sont liposolubles.

Le mélange issu de cette étape a) doit être aussi homogène que possible.

L'étape b) est une étape de stérilisation du produit qui est généralement conduite à une température de 110 à 140°C sur une courte période de l'ordre de 5-120 secondes.

Puis, à l'étape c), on refroidit à 10-75°C.

A la suite, le produit résultant peut être directement conditionné ou alors traité pour modifier ses qualités organoleptiques et/ou nutritionnelles.

A titre d'exemple, l'étape c) peut être immédiatement suivie d'une étape de lissage ou de décaillage pour obtenir un produit ayant la texture d'une crème ou d'un flan. Si le produit à préparer est de type yaourt, le produit issu de l'étape c) est soumis à une étape de fermentation dans des conditions classiques. Qu'il soit fermenté ou non, il peut être additionné de toute préparation notamment pour l'agrémenter, par exemple une préparation de fruits en morceaux, purées, jus ou à base de préparations de graines, de biscuits.

L'invention est illustrée avec les exemples suivants exposant différentes mises en oeuvre et avantages de celle-ci. En particulier, il y est fait référence à un lait d'avoine, mais bien entendu, la portée de l'invention ne s'y limite certainement pas et un produit de l'invention peut être obtenu à partir de tout lait de céréales tel que défini précédemment.

### Exemple 1 : Préparation d'un lait d'avoine

On ajoute à de l'eau portée à une température de 45-70°C, une alpha-amylase commercialisée sous la marque Validase®BAA par DSM en une concentration de 0,01 % (m/m) par rapport à la masse d'avoine, sous agitation.

On additionne ensuite à cette solution de la crème d'avoine pour atteindre une concentration de 12% (m/m) dans le mélange, tout en maintenant l'agitation. Cette agitation mécanique favorise la dispersion des poudres tout en facilitant l'accès de l'enzyme à l'amidon contenu dans les grains et ainsi améliore l'efficacité de l'hydrolyse.

Après 30-60 minutes, la température est portée à 70°C en environ 20-30 minutes, puis le lait résultant est soumis à un traitement d'homogénéisation puis de stérilisation à une température de 110-140°C pendant 5-120 secondes.

On récupère une fraction de ce lait pour une utilisation illustrée dans les exemples suivants.

La fraction restante est engagée dans une étape de fermentation pour une utilisation illustrée dans les exemples suivants. Les ferments employés sont ceux du type *S*. *thermophilus, L. bulgaricus, L. acidophilus, L. plantarum, L. helveticus, Bifidus, Lactococcus....*

### Exemple 2 : Préparation d'un produit de type crème dessert « gourmand »

Les ingrédients et leurs proportions sont les suivants :

| | |
|---|---|
| Lait d'avoine de l'exemple 1 | 73% |
| Sucre | 10% |
| Crème de riz | 2,5% |
| Poudre d'amande | 6% |
| Arômes | chocolat 0,7%, vanille 0,25% |
| Chocolat | 5% |
| Cacao | 2,5% |
| Vitamine E | 0,01% |

Le lait d'avoine est chauffé à environ 50°C, puis sont successivement ajoutés sous agitation le sucre, la crème de riz, les arômes, la purée d'amande et les ingrédients restants.

Le mélange est filtré. Après homogénéisation, il est soumis à un traitement UHT à 115°C pendant 30 secondes, et enfin refroidi à environ 20°C.

Le produit obtenu présente une texture crémeuse épaisse, il peut être conditionné.

### Exemple 3 : Préparation d'un dessert non fermenté

Préparation d'un produit de type dessert aux fruits :
Les ingrédients et leurs proportions sont les suivants :

| | |
|---|---|
| Lait d'avoine de l'exemple 1 | 90,3% |
| Sucre | 3,7% |
| Crème d'avoine | 1% |
| Crème de riz | 2,5% |
| Purée d'amande | 2,5% |
| Vitamine E | 0,01% |

Le lait d'avoine est chauffé à environ 50°C, puis sont successivement ajoutés sous agitation la crème d'avoine, la crème de riz, la purée d'amande et la vitamine E, le sucre étant ajouté tout au long de l'ajout des autres ingrédients.

Le mélange est filtré. Après homogénéisation sous pression, il est soumis à un traitement thermique à 115°C pendant 30 secondes, et enfin refroidi à une température de 20-45°C.

Le produit obtenu est filtré. On y ajoute ensuite des préparations de fruits, cerise, citron, framboise, abricot, ananas-passion pour obtenir un produit dont la texture est comparable à celle d'un yaourt brassé aux fruits.

### Préparation d'un autre produit de type dessert à la châtaigne :

Les ingrédients et leurs proportions sont les suivants :

| | |
|---|---|
| Lait d'avoine de l'exemple 1 | 89,3% |
| Sucre | 3,7% |
| Crème d'avoine | 1% |
| Crème de riz | 2,5% |
| Farine de châtaigne | 2% |
| Purée d'amande | 2,5% |
| Vitamine E | 0,01% |

Le lait d'avoine est chauffé à environ 50°C, puis sont successivement ajoutés sous agitation la crème d'avoine, la crème de riz, la farine de châtaigne, la purée d'amande et la vitamine E, le sucre étant ajouté tout au long de l'ajout des autres ingrédients.

Le mélange est filtré. Après homogénéisation sous pression, il est soumis à un traitement thermique à 115°C pendant 30 secondes, et enfin refroidi à une température de 20-45°C.

Le produit obtenu est conditionné.

### Exemple 4 : Préparation d'un produit de type yaourt brassé fermenté

### Préparation d'un produit de type yaourt brassé aux fruits :

Les ingrédients et leurs proportions sont les suivants :

| | |
|---|---|
| Lait d'avoine de l'exemple 1 | 89,3% |
| Sucre | 3,7% |
| Crème d'avoine | 2% |
| Crème de riz | 2,5% |
| Purée d'amande | 2,5% |
| Vitamine E | 0,01% |

Le lait d'avoine est chauffé à environ 50°C, puis sont successivement ajoutés sous agitation la crème d'avoine, la crème de riz, la purée d'amande et la vitamine E, le sucre étant ajouté tout au long de l'ajout des autres ingrédients

Le mélange est filtré. Après homogénéisation sous pression, il est soumis à un traitement thermique à 115°C pendant 30 secondes, et enfin refroidi à une température de 20-45°C.

Le produit obtenu est engagé dans une étape de fermentation classique avec l'ajout de ferments couramment utilisés pour la fabrication du yaourt. A l'issue, le produit est conditionné, avec ou sans ajout de préparations de fruits.

### Préparation d'un autre produit de type yaourt brassé aux fruits :

Les ingrédients et leurs proportions sont les suivants :

| | |
|---|---|
| Lait d'avoine de l'exemple 1 | 87,8% |
| Sucre | 3,7% |
| Crème d'avoine | 1% |
| Crème de riz | 2,5% |
| Purée d'amande | 2,5% |
| Purée de noisette | 2.5% |
| Vitamine E | 0,01% |

Le lait d'avoine est chauffé à environ 50°C, puis sont successivement ajoutés sous agitation la crème d'avoine, la crème de riz, la purée d'amande et la vitamine E, le sucre étant ajouté tout au long de l'ajout des autres ingrédients.

Le mélange est filtré. Après homogénéisation sous pression, il est soumis à un traitement thermique à 115°C pendant 30 secondes, et enfin refroidi à une température de 20-45°C.

Le produit obtenu est engagé dans une étape de fermentation classique avec l'ajout de ferments couramment utilisés pour la fabrication du yaourt. A l'issue, le produit est conditionné avec ou sans ajouter de préparations de fruits.

## Revendications

1. Produit alimentaire à base de lait végétal, **caractérisé en ce qu'**il comprend au moins un lait d'au moins une céréale chauffé, une poudre d'une céréale identique ou différente de celle dudit lait de céréale(s) et une purée ou une poudre d'au moins un oléagineux, et dont au moins 30% (m/m) par rapport aux fibres alimentaires totales sont apportées par la ou les céréales dudit lait, ledit lait d'au moins une céréale étant obtenu par hydrolyse enzymatique d'un milieu aqueux contenant la ou les céréales..

2. Produit selon la revendication 1, **caractérisé en ce qu'**il comprend au moins un lait de céréale(s), une poudre de la ou des céréales dudit lait, une poudre d'une céréale différente de celle dudit lait et une purée ou une poudre d'oléagineux.

3. Produit selon la revendication 1 ou 2, **caractérisé en ce qu'**il comprend au moins 60-95% de lait de céréale(s) chauffé contenant de 8-20% de céréale(s) (m/m), 1-10% de poudre de céréale(s) et 1-10% de poudre d'oléagineux.

4. Produit selon l'une quelconque des revendications précédentes, **caractérisé en ce qu'**au moins 50% (m/m) des fibres alimentaires par rapport à la masse desdites fibres alimentaires sont apportées par le lait de céréales chauffé.

5. Produit selon l'une quelconque des revendications précédentes, **caractérisé en ce qu'**il comprend du lait d'avoine chauffé, de la crème d'avoine, de la poudre de riz et de la purée ou de la poudre d'amande.

6. Produit selon l'une quelconque des revendications précédentes, **caractérisé en ce qu'**il comprend 60-95% de lait d'avoine chauffé, 0-5% de crème d'avoine, 1-5% de poudre de riz et 1-10% de poudre d'amande, les pourcentages étant exprimés en m/m par rapport à la masse du produit.

7. Produit selon l'une quelconque des revendications précédentes, **caractérisé en ce qu'**il comprend en outre des ingrédients alimentaires et/ou des éléments nutritionnels, et notamment des agents sucrants, des arômes, des vitamines, des minéraux, des acides aminés, des acides gras insaturés, des stérols, des antioxydants, des ferments, des fruits sous forme de préparations avec morceaux, jus, purées ou de préparations de graines, de biscuits.

8. Procédé de fabrication d'un produit à partir de lait végétal, **caractérisé en ce qu'**il comprend au moins les étapes suivantes :
a) On additionne sous agitation à du lait d'au moins une céréale, au moins une poudre d'au moins une céréale et une purée ou une poudre d'au moins un oléagineux, de préférence par mélange à une température de 10-70°C,
b) On soumet le mélange obtenu à l'étape a) à un traitement de stérilisation, de préférence par chauffage de 110 à 140°C pendant 5-120 secondes, et
c) On refroidit, de préférence à 10-75°C.

9. Procédé selon la revendication 8, **caractérisé en ce que**, à l'étape a), on additionne au lait de céréale(s), successivement, une poudre de la céréale dudit lait, une poudre d'une céréale différente de celle dudit lait et une purée d'oléagineux.

10. Procédé selonla revendication 8 ou 9, **caractérisé en ce que** le mélange à l'étape a) comprend au moins 60-95% de lait de céréale(s), 1-10% de poudre de céréale(s) et 1-10% de poudre d'oléagineux, les pourcentages étant exprimés en m/m par rapport à la masse du mélange.

11. Procédé selon l'une quelconque des revendications 8-10, **caractérisé en ce que** le mélange à l'étape a) comprend 60-95% de lait d'avoine chauffé contenant de 8-20% de céréales (m/m), 0-5% de poudre d'avoine, 1-5% de poudre de riz et 1-10% de purée d'amande, les pourcentages étant exprimés en m/m par rapport à la masse du mélange.

12. Procédé selon l'une quelconque des revendications 8-11, **caractérisé en ce que**, à l'étape a), on ajoute des ingrédients alimentaires et/ou des éléments nutritionnels, et notamment des agents sucrants, des arômes, des vitamines, des minéraux, des acides aminés, des acides gras insaturés, des stérols, des antioxydants.

13. Procédé selon l'une quelconque des revendications 8-12, **caractérisé en ce que**, après l'étape c), on soumet le produit à une étape de fermentation.

14. Procédé selon l'une quelconque des revendications 8-13, **caractérisé en ce que** le lait de céréale(s) est obtenu par hydrolyse enzymatique avec une alpha-amylase d'une solution aqueuse à 8-20% (m/m) de la ou desdites céréales.

15. Procédé l'une quelconque des revendications 8-14, **caractérisé en ce que**, avant l'étape a), le lait de céréale(s) est soumis à une étape de fermentation.
